# EUROPÄISCHE PATENTANMELDUNG

(11) **EP 2 514 564 A1**
(43) Veröffentlichungstag der Anmeldung: **24.10.2012**
(21) Anmeldenummer: 11162948.1
(22) Anmeldetag: 19.04.2011
(51) Int. Cl.: B25B 21/00, B25B 23/00, F16B 35/04

(54) **Vorrichtung zum Anziehen oder Lösen einer Mutter**

(71) Anmelder: Sentürk, Bülent, 81549 München (DE)
(72) Erfinder: Sentürk, Bülent, 81549 München (DE)
(74) Vertreter: Strobel, Wolfgang

(57) **Zusammenfassung**

Die vorliegende Erfindung betrifft eine Vorrichtung (1) zum Anziehen oder Lösen einer Mutter (5) auf einem Gewindebolzen (11) oder einer Gewindestange (21) zum Klemmen von Verbindungselementen (51; 52), mit einer drehbaren Außenhülse (3), die an einem ihrer Endbereiche eine Ausnehmung (33) zur Aufnahme der zu betätigenden Mutter (5) aufweist, einer Innenhülse (4), die an einem ihrer Endbereiche, der benachbart zum Endbereich zur Aufnahme der Mutter (5) der Außenhülse (3) ist, eine Ausnehmung (43) zur Aufnahme eines Verbindungsabschnitts (19; 29) des Gewindebolzens (11) oder der Gewindestange (21) aufweist, und mit je einer Verbindungseinrichtung (37, 49) der Außen- und Innenhülse mit einem Antriebswerkzeug, wobei im Betrieb sich die Innenhülse (4) drehfest auf dem drehfest gehaltenen Gewindebolzen (11) oder der Gewindestange (21) abstützt, sich die Außenhülse (3) bezüglich der Innenhülse (4) dreht und die Bewegung auf die Mutter (5) überträgt.

## Beschreibung

Die vorliegende Erfindung betrifft eine Vorrichtung zum Anziehen oder Lösen einer Mutter auf einem Gewindebolzen oder einer Gewindestange zum Klemmen von Verbindungselementen.

Weiterhin betrifft die vorliegende Erfindung einen Gewindebolzen bzw. eine Gewindestange zur Verwendung mit einer Vorrichtung zum Anziehen oder Lösen einer Mutter.

Derartige Vorrichtungen finden breiten Einsatz, insbesondere bei flanschartigen Verbindungen, die mittels einer Vielzahl am Umfang der Flansche verteilte Bolzen lösbar zusammengehalten werden sollen. Einsatzbereiche sind, um nur einige zu nennen: Getriebe, Turbinen, Stahlwerke, Kraftwerke, Windräder, Großmaschinenbau, Raffinerien, Chemieanlagen, Rohrleitungsbau, allgemeine HV-Schraubverbindungen, und Automobilindustrie, etc.

Zur Gewährleistung einer sicheren Verbindung werden Anzugsmomente zum Anziehen der Mutter auf dem Gewindebolzen definiert und diese Drehmomente werden mit entsprechenden Werkzeugen auf die anzuziehende Mutter aufgebracht. Derartige Werkzeuge sind zum Beispiel Hydraulikschrauber, welche einen diskontinuierlichen Antrieb aufweisen. Zum Einsatz kommen auch pneumatisch oder elektrisch angetriebene Antriebsvorrichtungen, die einen kontinuierlichen, endlosen Antrieb aufweisen.

Die aufzubringenden Drehmomente sind so groß, dass sie eine von einer Bedienungsperson aufbringbare Gegenkraft regelmäßig übersteigen. Die Antriebsvorrichtung muss deshalb abgestützt werden, um sie zu fixieren, wodurch sie das Drehmoment auf anzuziehende oder zu lösende Muttern übertragen kann.

Um eine Abstützung der Antriebsvorrichtung zu schaffen, wurde im Stand der Technik ein Reaktionsarm vorgesehen, der an dem Gehäuse der Antriebsvorrichtung angebracht ist. Ein derartiger Reaktionsarm ist beispielsweise aus der DE 10 2008 042 436 B4 bekannt. Der Reaktionsarm wird in Anlage an eine gegebenenfalls bereits angezogene benachbarte Mutter gebracht, wonach dann die Kraft der Antriebsvorrichtung auf die anzuziehende Mutter aufgebracht werden kann. Das Arbeiten mit einem Reaktionsarm ist jedoch umständlich und fordert stets eine Möglichkeit einer Anlage des Reaktionsarmes. Wenn dies nicht der Fall ist, kann dieses Werkzeug nicht zum Einsatz kommen.

Gemäß EP 0 754 527 B1 wurde deshalb ein druckmittelbetätigtes Werkzeug zum Drehen und Entspannen eines Gewindeverbinders vorgeschlagen, bei dem mehrere ineinander gesetzt drehende und nicht drehende Hülsen vorhanden sind, wobei die Abstützung an einem verlierbaren Zwischenelement in Form einer Distanz-Gewindescheibe erfolgt. Der Aufbau dieses Werkzeugs ist kompliziert und benötigt zusätzlich ein Zwischenelement, das zwischen der anzuziehenden Mutter und dem zu verbindenden Element (Flansch etc.) vorgesehen werden muss. Die Probleme der Kompliziertheit und Komplexität dieses Systems lässt sich beim Anziehen von Elementen eines Windrads in großer Höhe durch eine Bedienungsperson nachvollziehen.

Der vorliegenden Erfindung liegt deshalb die Aufgabe zugrunde, eine Vorrichtung zum Anziehen oder Lösen einer Mutter zu schaffen, mit der die oben genannten Nachteile überwunden werden, und mit der eine leicht handzuhabende Vorrichtung zum Anziehen oder Lösen von Muttern geschaffen wird, mit der auf zusätzliche Reaktionselemente zur Abstützung des aufzubringenden Drehmoments verzichtet werden kann.

Diese Aufgabe wird durch die Merkmale des Patentanspruchs 1 gelöst.

Die erfindungsgemäße Vorrichtung zum Anziehen oder Lösen einer Mutter auf einem Gewindebolzen oder einer Gewindestange zum Klemmen von Verbindungselementen weist folgende Merkmale auf:
- eine drehbare Außenhülse, die an einem ihrer Endbereiche eine Ausnehmung zur Aufnahme der zu betätigenden Mutter aufweist,
- eine Innenhülse, die an einem ihrer Endbereiche, der benachbart zum Endbereich zur Aufnahme der Mutter der Außenhülse ist, eine Ausnehmung zur Aufnahme eines Verbindungsabschnitts des Gewindebolzens oder der Gewindestange aufweist, und
- je eine Verbindungseinrichtung der Außen- und Innenhülse mit einem Antriebswerkzeug, wobei im Betrieb sich die Innenhülse drehfest auf dem drehfest gehaltenen Gewindebolzen oder der Gewindestange abstützt, sich die Außenhülse bezüglich der Innenhülse dreht und die Bewegung auf die Mutter überträgt.

Mit der erfindungsgemäßen Vorrichtung zum Anziehen oder Lösen einer Mutter wird vorteilhafterweise erreicht, dass sich die Vorrichtung auf dem Gewindebolzen oder der Gewindestange selbst abstützt und somit kein weiteres Stützelement oder Zwischenelement notwendig ist bzw. ein weiterer Stützpunkt entbehrlich ist. Entsprechend einfach kann die Bedienungsperson die Vorrichtung handhaben und gestaltet sich das Anziehen bzw. Lösen von Muttern vor Ort, wodurch die erfindungsgemäße Vorrichtung gerade für den Einsatz an schwierigen Orten, wie beispielsweise bei der Montage von Windkraftanlagen in großer Höhe, geeignet ist. Vorteilhafterweise ist beim Anziehen oder Lösen einer Mutter kein Gegenhalterschlüssel bzw. Reaktionsarm notwendig.

Vorteilhafterweise weist der Verbindungsabschnitt des Gewindebolzens oder der Gewindestange einerseits eine Mehrkantaußenkontur und die Ausnehmung zur Aufnahme des Verbindungsabschnitts des Gewindebolzens oder der Gewindestange andererseits eine entsprechende Mehrkant-Innenkontur auf. Die Mehrkantkonturen können dabei beliebig gewählt werden, beispielsweise als Vierkant, Sechskant, Achtkant, etc..

Die erfindungsgemäße Vorrichtung ist sowohl für eine hydraulische bzw. diskontinuierliche Antriebsvorrichtung als auch für eine pneumatische oder elektrische bzw. kontinuierliche Antriebsvorrichtung geeignet. Zur Verbindung mit einer diskontinuierlichen Antriebsvorrichtung weist der Endbereich der Innenhülse einen hülsenartigen Vorsprung und die Außenhülse wenigstens in ihrem entsprechendem Endbereich eine Außenzahnung auf. Damit ist die erfindungsgemäße Vorrichtung zur Verbindung mit einer hydraulischen Antriebsvorrichtung, wie sie beispielsweise in der EP 0 754 527 B1 beschrieben ist, geeignet.

Für den Antrieb mit einer kontinuierlichen Antriebsvorrichtung ist die Außenhülse mit einer Platte mit Innenzahnung verbunden und ist die Innenhülse mit einer Ausnehmung mit einer Mehrkant- insbesondere Vierkant-Innenkontur versehen.

In einer einfachen Ausführungsform bestehen die Außenhülse und die Innenhülse aus einer Werkstoffpaarung, die ermöglicht, dass die Außenhülse auf der Innenhülse gleitet. Alternativ können je nach Anwendungsfall zusätzlich Einrichtungen, wie beispielsweise Kugeloder Rollenlager vorgesehen sein, die eine Bewegung der beiden Hülsen untereinander sicherstellen.

Gegenstand der vorliegenden Erfindung ist auch ein Gewindebolzen zur Verwendung mit der erfindungsgemäßen Vorrichtung, die eine Stange aufweist, die an einem Endbereich ein Gewinde zur Aufnahme einer Mutter und am anderen Ende einen Schraubenkopf aufweist, wobei sich der Gewindebolzen dadurch auszeichnet, dass am Ende des Gewinde-Endbereichs ein Mehrkant-Verbindungsabschnitt ausgebildet ist. Dieser kann vorteilhafterweise als Sechskant oder Vierkant ausgebildet sein.

Weiterhin umfasst die vorliegende Erfindung auch eine Gewindestange zur Verwendung mit einer Vorrichtung gemäß der vorliegenden Erfindung, die an ihren Endbereichen Gewindeabschnitte zur Aufnahme von wenigstens je einer Mutter aufweist, wobei sich die Gewindestange dadurch auszeichnet, dass der Gewindeabschnitt gegenläufige Gewindesteigungen aufweisen, und dass am Ende wenigstens eines Endbereichs ein Mehrkant-Verbindungsabschnitt ausgebildet ist.

Auch dieser Mehrkant-Verbindungsabschnitt ist vorteilhafterweise als Sechskant oder als Vierkant ausgebildet, wobei weiterhin vorteilhafterweise zum universellen Einsatz der Gewindestange an ihren Enden ein Mehrkant-Verbindungsabschnitt ausgebildet ist. Dies hat beispielsweise den Vorteil, dass ein drehfestes Abstützen der Gewindestange an den Verbindungselementen sichergestellt ist, weil das auf der einen Seite aufgebrachte Drehmoment ein Festziehen der auf der anderen Seite bereits vorhandenen Mutter hervorruft, wohingegen bei gleichen Gewindesteigungen, ein Lösen hervorgerufen wird, was ein Anziehen der zweiten Mutter verhindern würde.

Weitere Einzelheiten, Merkmale und Vorteile der vorliegenden Erfindung ergeben sich aus der nachfolgenden Beschreibung unter Bezugnahme auf die Zeichnungen. Darin zeigt:
- Fig. 1: einen erfindungsgemäßen Gewindebolzen zur Verwendung mit der Vorrichtung der vorliegenden Erfindung;
- Fig. 2: eine erfindungsgemäße Gewindestange zur Verwendung mit der erfindungs-gemäßen Vorrichtung;
- Fig. 3: eine Seitenansicht der erfindungsgemäßen Vorrichtung nach einer ersten Aus-führungsform für diskontinuierlichen Antrieb;
- Fig. 4: eine Schnittansicht entlang der Linie B-B von Figur 3;
- Fig. 5: eine Seitenansicht des Gesamtaufbaus mit Einsatz der Vorrichtung von Figur 3 zur Befestigung von Verbindungselementen mittels eines Schraubenbolzens;
- Fig. 6: eine Schnittansicht entlang der Linie A-A von Figur 5;
- Fig. 7: eine Seitenansicht des Gesamtaufbaus mit Einsatz der erfindungsgemäßen Vorrichtung von Figur 3 bei einer Gewindestange gemäß Figur 2 zur Befesti-gung von Verbindungselementen;
- Fig. 8: eine Schnittansicht entlang der Linie A-A von Figur 7;
- Fig. 9: eine Ansicht auf eine weitere erfindungsgemäße Ausführungsform der erfin-dungsgemäßen Vorrichtung zum Einsatz bei kontinuierlichem Antrieb;
- Fig. 10: eine Schnittansicht entlang der Linie B-B von Figur 9;
- Fig. 11: eine Seitenansicht des Gesamtaufbaus mit Einsatz der erfindungsgemäßen Vorrichtung von Figur 9 bei einem Gewindebolzen gemäß Figur 1 zur Befesti-gung von Verbindungselementen;
- Fig. 12: eine Schnittansicht entlang der Linie A-A von Figur 11;
- Fig. 13: eine Seitenansicht des Gesamtaufbaus mit Einsatz der erfindungsgemäßen Vorrichtung von Figur 9 bei einer Gewindestange gemäß Figur 2 zur Befesti-gung von Verbindungselementen; und
- Fig. 14: eine Schnittansicht entlang der Linie A-A von Figur 13.

In den Figuren sind gleiche Elemente mit den gleichen Bezugsziffern bezeichnet.

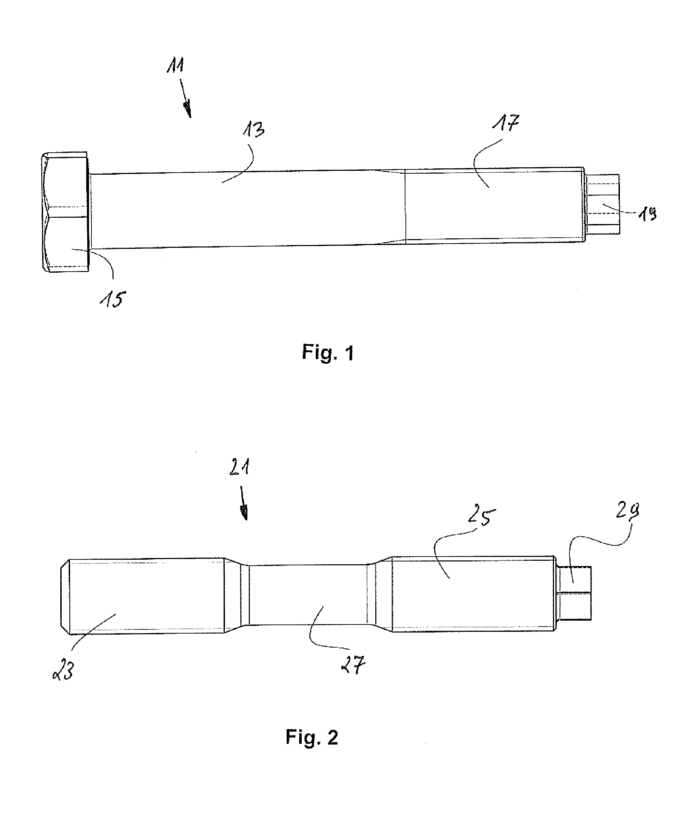

In Figur 1 ist ein erfindungsgemäßer Gewindebolzen 11 in Seitenansicht dargestellt, der eine Stange 13 aufweist, die an dem in der Figur 1 linken Ende einen Mehrkantkopf in Form eines Sechskantkopfes 15 aufweist. Im gegenüberliegenden Endbereich ist, in herkömmlicher Weise, ein Gewindeabschnitt 17 ausgebildet, der zur Aufnahme einer entsprechenden Mutter dient, wie das weiter unten näher erläutert wird.

Zur Verbindung mit einer erfindungsgemäßen Vorrichtung weist der Gewindebolzen 11 an dem dem Sechskantkopf 15 entgegengesetzten Ende eine Mehrkant-Außenkontur 19 auf. Die Mehrkant-Außenkontur 19 ist in ihren Außenabmessungen kleiner als der Gewindeabschnitt 17, damit eine entsprechende Mutter ungehindert auf den Gewindeabschnitt 17 aufgeschraubt werden kann.

In Figur 2 ist eine erfindungsgemäße Gewindestange 21 in Seitenansicht dargestellt, welche einen Gewindeabschnitt 23 an einem Ende und einen Gewindeabschnitt 25 am anderen Ende aufweist. Zwischen den beiden Gewindeabschnitten 23 und 25 befindet sich in Abhängigkeit von der Länge der gesamten Gewindestange 21 ein Mittenabschnitt 27, dessen Außendurchmesser geringer ist als der Außendurchmesser der Gewindeabschnitte 23 und 25.

Vorteilhafterweise weisen die beiden Gewindeabschnitte unterschiedliche Gewindesteigungen (rechtsdrehend oder linksdrehend) auf, deren Funktion und Vorteile weiter unten näher beschrieben wird.

Ähnlich wie beim Gewindebolzen 11 weist die Gewindestange 21 an wenigstens einem Ende eine Mehrkant-Außenkontur 29, im dargestellten Ausführungsbeispiel eine Vierkant-Außenkontur auf, die zur Verbindung mit dem entsprechenden Werkzeug dient, wie unten näher erläutert wird.

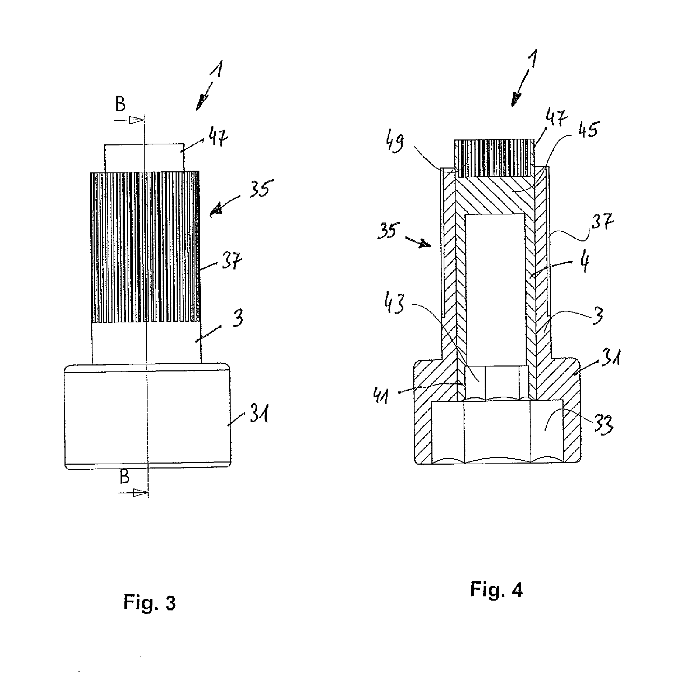

In Figur 3 ist in Seitenansicht eine erste Ausführungsform der erfindungsgemäßen Vorrichtung zum Anziehen bzw. Lösen einer Mutter im Einsatz dargestellt und in Figur 4 ist eine Schnittansicht entlang der Line B-B von Figur 3 dargestellt. Bezugnehmend auf die Figuren 3 und 4 weist eine erste alternative Ausführungsform der Vorrichtung 1 zum Anziehen oder Lösen einer Mutter auf einem Gewindebolzen oder einer Gewindestange zum Klemmen von Verbindungselementen eine drehbare Außenhülse 3 auf. Wie aus Figur 3 ersichtlich weist die Außenhülse 3 einen vergrößerten unteren Endabschnitt 31 auf, der, wie deutlich aus Figur 4 ersichtlich, eine untere Innenausnehmung 33 aufweist, die eine Sechskant-Innenkontur aufweist, wodurch sie zur Aufnahme einer entsprechenden Sechskant-Mutter (hier nicht dargestellt) geeignet ist. Im oberen Endabschnitt 35 ist eine Außenzahnung 37 vorgesehen, die zur Verbindung mit einer entsprechenden hydraulischen Antriebsvorrichtung (nicht dargestellt) dient.

Wie aus Figur 4 ersichtlich, ist die Außenhülse 3 um eine Innenhülse 4 angeordnet, die sich bis in den vergrößerten Endabschnitt 31 der Außenhülse 3 erstreckt. Im unteren Endbereich 41 der Innenhülse 4 ist eine Mehrkant-Ausnehmung 43 ausgebildet, die dazu dient mit der Mehrkant-Außenkontur 19 bzw. 29 des Gewindebolzens 11 bzw. der Gewindestange 21 in Verbindung zu kommen. Dies wird weiter unten näher erläutert.

Die Innenhülse 4 ist im Endabschnitt 45, der dem Endbereich 41 entgegengesetzt ist, geschlossen, wobei ein äußerer Endabschnitt 47 vorgesehen ist, der über das Ende der Außenhülse 3 hinaus vorspringt und hülsenförmig ausgebildet ist. Wie aus Figur 4 ersichtlich, ist in dem hülsenförmigen Endabschnitt 47 eine Innenzahnung 49 ausgebildet, die mit einem entsprechendem Verbindungselement mit der Antriebseinrichtung (nicht dargestellt) verbindbar ist. Wie weiterhin aus Figur 4 ersichtlich, kann die Außenhülse 3 sich unmittelbar gegenüber der Innenhülse 4 drehen.

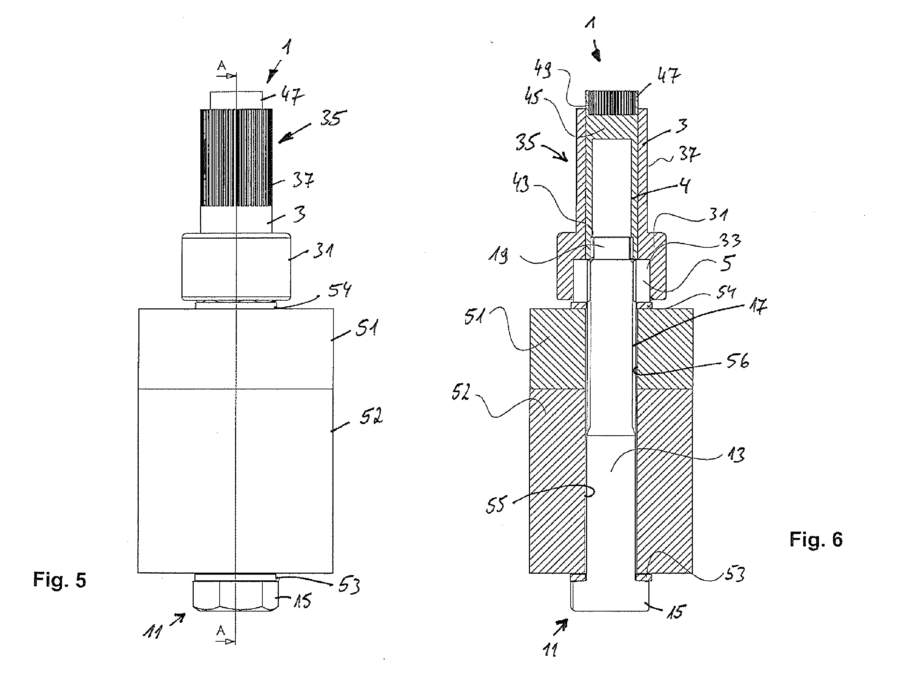

Nachfolgend wird Bezug genommen auf die Figuren 5 und 6, in denen die erfindungsgemäße Vorrichtung 1 im Betrieb zum Anziehen einer Mutter auf den Gewindebolzen 11 in Seitenansicht gemäß Figur 4 und in Schnittansicht gemäß der Linie A-A von Figur 5 in Figur 6 dargestellt ist.

Zwei Verbindungselemente 51 und 52, die nur äußerst schematisch zur Veranschaulichung dargestellt sind, sollen mittels des Gewindebolzens 11 unter Aufbringung eines definierten Anzugsmoments mithilfe einer auf den Gewindeabschnitt 17 des Gewindebolzens 11 aufgeschraubten Mutter 5 miteinander verbunden werden. Wie üblich, ist zwischen Verbindungselement 52 und dem Schraubenkopf 15 eine Unterlegscheibe 53 eingesetzt. Zwischen Verbindungselement 51 und Mutter 5 ist ebenfalls eine Unterlegscheibe 54 eingesetzt.

Nachfolgend wird die Funktionsweise der erfindungsgemäßen Vorrichtung 1 beschrieben, die insbesondere für den diskontinuierlichen Antrieb eines Hydraulikschraubers geeignet ist.

Der Gewindebolzen 11 wird zusammen mit der Unterlegscheibe 53 entsprechend durch eine Öffnung 55 im Verbindungselement 52 und eine Öffnung 56 im Verbindungselement 51 gesteckt, die Unterlegscheibe 54 daraufgesetzt und die Mutter 5 in der Regel von Hand aufgeschraubt, bis der Abschnitt mit Mehrkant-Außenkontur 19 am Gewindebolzen 11 wieder frei zugänglich ist.

Sodann wird die Vorrichtung 1 aufgesetzt, wobei die Innenkontur 33 der unteren Ausnehmung 31 sich um die Mutter 5 erstreckt und die Mehrkantausnehmung 43 sich um den Mehrkantabschnitt 19 erstreckt. Das Hydraulikwerkzeug wird aufgesetzt, wobei eine Verbindung über die Hülse 40 und eine Drehverbindung über die Außenzahnung 37 hergestellt wird. Im intermittierenden Betrieb wird dann die äußere Hülse 3 gegenüber der inneren drehfesten Hülse 4 gedreht, wobei beim vorherigen Aufschrauben der Mutter 5 sichergestellt wurde, dass der Sechskantkopf 15 des Gewindebolzens drehfest an der Unterlegscheibe bzw. dem Verbindungselement 52 anliegt. Der Lösevorgang erfolgt in entsprechend umgekehrter Reihenfolge.

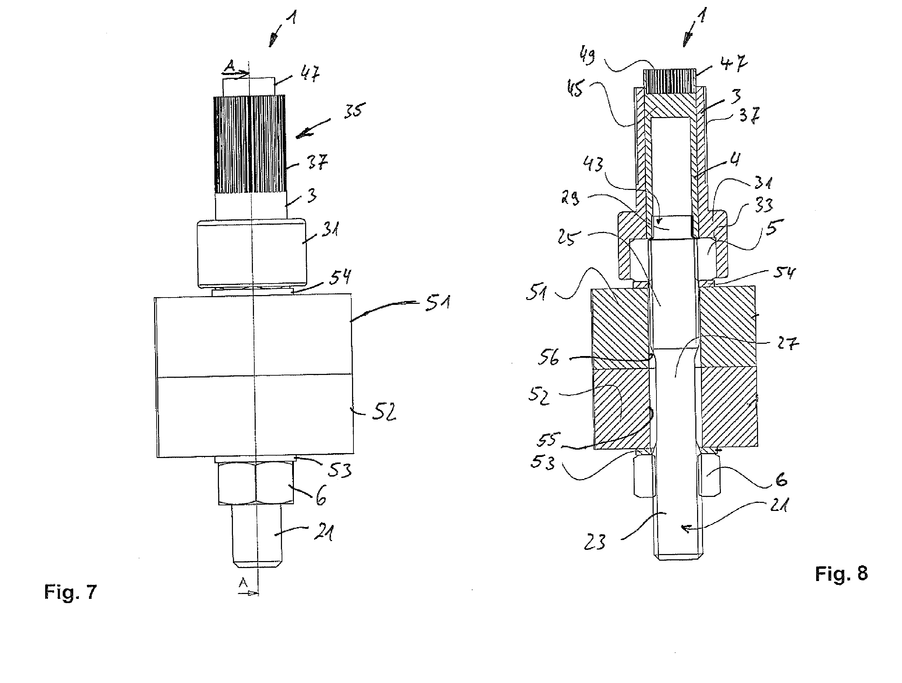

Es wird nunmehr Bezug genommen auf die Figuren 7 und 8, die einen ähnlichen Aufbau zeigen wie die Figuren 5 und 6, wie aus den jeweiligen Bezugsziffern hervorgeht. Der wesentliche Unterschied ist die Verwendung der Gewindestange 21 anstelle des Gewindebolzens 11. Die Gewindestange 21 ist ausgebildet zur Aufnahme der Mutter 5 auf den Gewindeabschnitt 25 sowie einer weiteren Mutter, einer Kontermutter 6 auf den Gewindeabschnitt 23. Um zu verhindern, dass beim Anziehen der Mutter 5 durch die erfindungsgemäße Vorrichtung 1 sich die Gewindestange 21 mitdreht, weist der Gewindeabschnitt 23 eine entgegengesetzte Gewindesteigung zur Mutter 5 mit Gewindeabschnitt 25 auf. Dadurch bewegt sich die Kontermutter 6 bei Drehung der Gewindestange 21 auf die Unterlegscheibe 53 zu, wodurch sie stärker geklemmt wird.

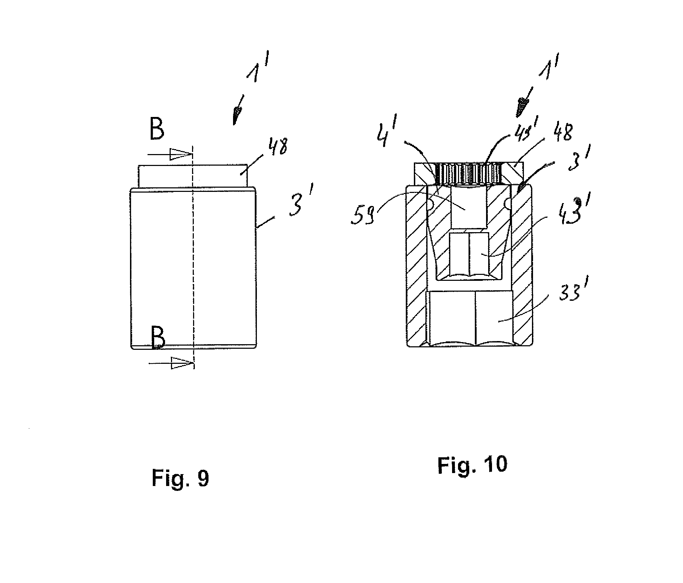

Es wird nunmehr Bezug genommen auf die Figuren 9 und 10. In Figur 9 ist eine Seitenansicht einer erfindungsgemäßen Vorrichtung 1' dargestellt, die zur Verbindung mit einer kontinuierlichen Antriebsvorrichtung, insbesondere mit einer pneumatischen oder elektrischen Antriebsvorrichtung dient. In Figur 10, die eine Schnittansicht entlang der Linie B-B von Figur 9 ist, ist der Aufbau dieser Vorrichtung 1' näher dargestellt.

Eine Außenhülse 3' weist in ihrem einen Endabschnitt, in Figur 10 ist es der untere Endabschnitt, eine Innenausnehmung 33' auf, die eine Mehrkantkontur, insbesondere eine Sechskantkontur aufweist, zur Aufnahme der anzuziehenden Mutter 5.

Die Vorrichtung 1' weist weiterhin eine Innenhülse 4' auf, um die sich die Außenhülse 3' drehen kann. Zur Aufnahme des Mehrkants sowohl des Gewindebolzens 11 als auch der Gewindestange 21 ist in einem, der Innenausnehmung 33' benachbarten Endbereich der Innenhülse 4' eine Mehrkantausnehmung 43', ähnlich wie bei der Innenhülse 4, ausgebildet. Zur Verbindung mit einer sogenannten "Stecknuss" der kontinuierlichen Antriebsvorrichtung, die eine Mehrkantform, insbesondere eine Vierkantform, aufweist, ist in der Innenhülse 4' eine entsprechende Mehrkant-Innenausnehmung 49 im anderen Endbereich der Innenhülse 4' ausgebildet.

Zur Übertragung der Drehbewegung von der kontinuierlichen Antriebsvorrichtung auf die Außenhülse 3' ist eine, mit der Außenhülse 3' verbundene Platte 48 vorgesehen, die sich an den Rand der beiden Hülsen 3' und 4' anschließt und diesen überdeckt. Die Platte 48 weist eine Innenzahnung 49' auf zum Eingriff eines entsprechenden Antriebselement der Antriebsvorrichtung.

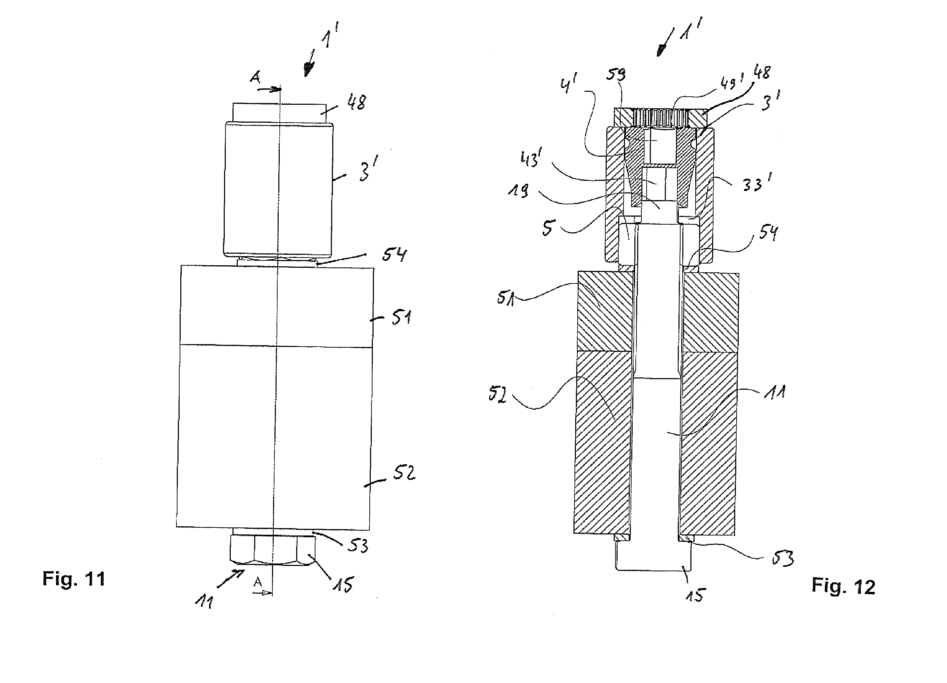

In den Figuren 11 und 12, auf die nunmehr Bezug genommen wird, ist in Figur 11 die Seitenansicht der erfindungsgemäßen Vorrichtung 1' aufgesetzt auf eine anzuziehende Mutter 5 und in Figur 12 die Schnittansicht entlang der Linie A-A von Figur 11 dargestellt. Der befestigende Bolzen 11 bildet über den Mehrkantabschnitt 19 eine Abstützung der Innenhülse 4', die über die Mehrkant-Innenausnehmung 59 in Verbindung mit der Stecknuss der kontinuierlichen Antriebsvorrichtung, eine Abstützung dieser Antriebsvorrichtung bildet, und das Drehmoment der Antriebsvorrichtung kann dann über die Innenzahnung 49' der Platte 48 auf die Außenhülse 3' übertragen werden, die die Mutter 5 anziehen oder lösen kann.

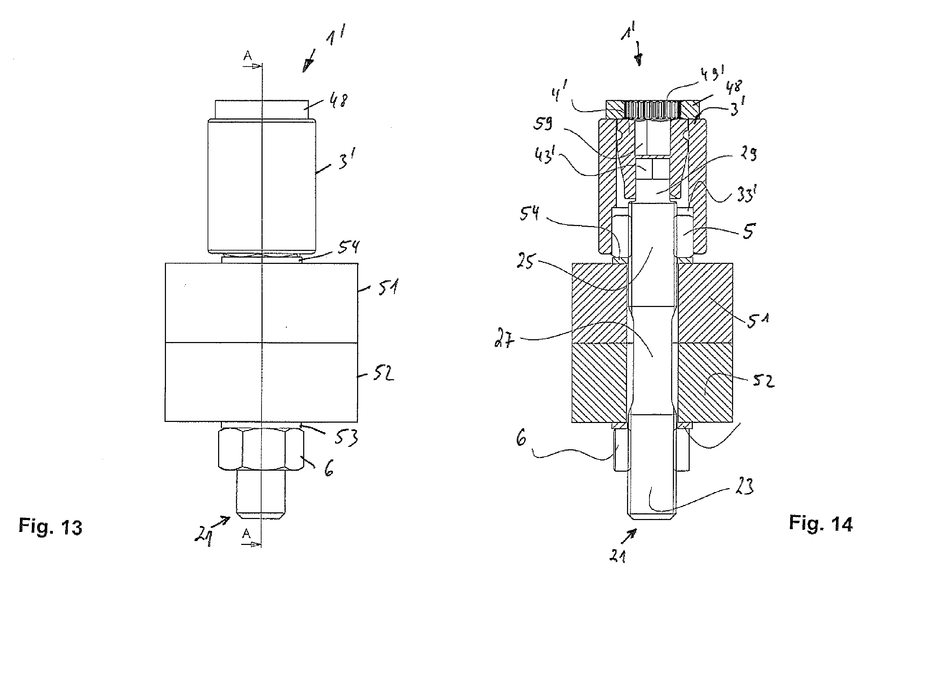

Es wird nunmehr Bezug genommen auf die Figuren 13 und 14, in denen, analog zu den Figuren 7 und 8, anstelle des Gewindebolzens 11 gemäß den Figuren 11 und 12 die Gewindestange 21 als Fixierungselement für die Verbindungselemente 51 und 52 dient. Hinsichtlich der Wirkungsweise dieses Aufbaus wird auf die obige Beschreibung verwiesen.

Mit der vorliegenden erfindungsgemäßen Vorrichtung 1, 1' wird der große Vorteil erreicht, dass die Vorrichtung zusammen mit dem angepassten Gewindebolzen 11 bzw. der angepassten Gewindestange 21 eine Abstützung für die jeweilige Antriebsvorrichtung schafft, so dass weitere Fixierungselemente oder Maßnahmen vermieden werden können, was zu einer erheblich einfacheren Handhabung der Antriebsvorrichtung beim Anziehen der Mutter 5, vor allem bei ungünstigen Orten, wie z.B. Windkraftanlagen, führt.

## Patentansprüche

1. Vorrichtung (1; 1') zum Anziehen oder Lösen einer Mutter (5) auf einem Gewindebolzen (11) oder einer Gewindestange (21) zum Klemmen von Verbindungselementen (51; 52), mit
einer drehbaren Außenhülse (3; 3'), die an einem ihrer Endbereiche eine Ausnehmung (33; 33') zur Aufnahme der zu betätigenden Mutter (5) aufweist,
einer Innenhülse (4; 4'), die an einem ihrer Endbereiche, der benachbart zum Endbereich zur Aufnahme der Mutter (5) der Außenhülse (3; 3') ist, eine Ausnehmung (43; 43') zur Aufnahme eines Verbindungsabschnitts (19; 29) des Gewindebolzens (11) oder der Gewindestange (21) aufweist, und
mit je einer Verbindungseinrichtung (37, 49; 59, 49') der Außen- und Innenhülse mit einem Antriebswerkzeug,
wobei im Betrieb sich die Innenhülse (4; 4') drehfest auf dem drehfest gehaltenen Gewindebolzen (11) oder der Gewindestange (21) abstützt, sich die Außenhülse (3; 3') bezüglich der Innenhülse (4; 4') dreht und die Bewegung auf die Mutter (5) überträgt.

2. Vorrichtung nach Anspruch 1, **dadurch gekennzeichnet, dass** der Verbindungsabschnitt (19; 29) des Gewindebolzens (11) oder der Gewindestange (21) einerseits eine Mehrkant-Außenkontur und die Ausnehmung (43; 43') zur Aufnahme des Verbindungsabschnitts des Gewindebolzens/ der Gewindestange andererseits eine entsprechende Mehrkant-Innenkontur aufweist.

3. Vorrichtung nach Anspruch 1 oder 2, **dadurch gekennzeichnet, dass** zur Verbindung mit einer hydraulischen bzw. diskontinuierlichen Antriebsvorrichtung der andere Endbereich der Innenhülse (4) einen hülsenartigen Vorsprung (47) und die Außenhülse (3) wenigstens in ihrem entsprechendem Endbereich eine Außenzahnung (37) aufweist.

4. Vorrichtung nach Anspruch 3, **dadurch gekennzeichnet, dass** der hülsenartige Vorsprung (47) als Verbindungseinrichtung zur Antriebseinrichtung ausgebildet ist.

5. Vorrichtung nach Anspruch 1 oder 2, **dadurch gekennzeichnet, dass** zur Verbindung mit einer pneumatischen oder elektrischen bzw. kontinuierlichen Antriebsvorrichtung die Außenhülse (3') mit einer Platte (48) mit Innenzahnung (49') verbunden ist und die Innenhülse (4') eine Ausnehmung (59) mit Mehrkant- insbesondere Vierkant-Innenkontur aufweist.

6. Vorrichtung nach einem der Ansprüche 1 bis 5, **dadurch gekennzeichnet, dass** die Außenhülse (3; 3') auf der Innenhülse (4; 4') gleitet.

7. Gewindebolzen (11) zur Verwendung mit einer Vorrichtung nach einem der Ansprüche 1 bis 6, mit einer Stange (13), die an einem Endbereich ein Gewinde (17) zur Aufnahme einer Mutter und am anderen Endbereich einen Schraubenkopf (15) aufweist, **dadurch gekennzeichnet, dass** am Ende des Gewinde-Endbereichs (17) ein Mehrkant-Verbindungsabschnitt (19) ausgebildet ist.

8. Gewindebolzen nach Anspruch 7, **dadurch gekennzeichnet, dass** der Mehrkant-Verbindungsabschnitt (19) als Sechskant oder Vierkant ausgebildet ist.

9. Gewindestange (21) zur Verwendung mit einer Vorrichtung nach einem der Ansprüche 1 bis 6, die an ihren Endbereichen Gewindeabschnitte (23, 25) zur Aufnahme von wenigstens je einer Mutter aufweist, **dadurch gekennzeichnet, dass** die Gewindeabschnitte (23, 25) gegenläufige Gewindesteigungen aufweisen, und dass am Ende wenigstens eines Endbereichs ein Mehrkant-Verbindungsabschnitt ausgebildet ist.

10. Gewindestange nach Anspruch 9, **dadurch gekennzeichnet, dass** der wenigstens eine Mehrkant-Verbindungsabschnitt (29) als Sechskant oder Vierkant ausgebildet ist.

11. Gewindestange nach Anspruch 9 oder 10, **dadurch gekennzeichnet, dass** an jedem Ende der Gewindestange (21) ein Mehrkant-Verbindungsabschnitt ausgebildet ist.
